# EUROPÄISCHE PATENTSCHRIFT

(11) **EP 1 301 755 B1**
(45) Veröffentlichungstag und Bekanntmachung des Hinweises auf die Patenterteilung: **07.04.2004**
(21) Anmeldenummer: 01955250.4
(22) Anmeldetag: 16.07.2001
(51) Int. Cl.: G01C 21/30, G01C 21/00

(54) **NAVIGATIONSGERÄT UND VERFAHREN ZUR POSITIONSKORREKTUR**
NAVIGATION DEVICE AND POSITION CORRECTION METHOD
SYSTEME DE NAVIGATION ET PROCEDE DE CORRECTION DE POSITION

(30) Priorität: 21.07.2000 DE 10035626
(43) Veröffentlichungstag der Anmeldung: 16.04.2003
(73) Patentinhaber: SIEMENS AKTIENGESELLSCHAFT, 80333 München (DE)
(72) Erfinder: TIEDE, Lutz-Wolfgang, 93138 Lappersdorf (DE); MOSIS, Torsten, 93053 Regensburg (DE); LEIMBACH, Jürgen, Manfred, 93055 Regensburg (DE); SCHUPFNER, Markus, 93047 Regensburg (DE)
(86) Internationale Anmeldenummer: PCT/DE2001/002656
(87) Internationale Veröffentlichungsnummer: WO 2002/008694

(56) Entgegenhaltungen:
- EP-A- 0 339 639
- EP-A- 0 349 977
- EP-A- 0 601 712
- DE-A- 19 803 662
- US-A- 5 862 511

## Beschreibung

Die Erfindung betrifft ein Navigationsgerät und ein Verfahren zur Positionskorrektur bei Befahren von nicht digitalisierten Gebieten mittels Koppelnavigation.

Ein derartiges Gerät findet Anwendung insbesondere bei Kraftfahrzeugen. Navigationsgeräte weisen eine Sensoranordnung zur Bestimmung einer Entfernung und einer Richtung auf. Zur Entfernungserkennung wird üblicherweise eine Tachometersignal oder eine Odometersignal verwendet und zur Richtungserkennung ein Gyroskop. Zusätzlich kann eine GPS-Ortung (Global Positioning System) eingesetzt werden. Die von der Sensoranordnung ermittelten Werte werden mittels eines Prozessors in eine Position umgerechnet. Diese Position wird dann üblicherweise mit einer auf einem Speichermedium digitalisierten Straßenkarte verglichen. Die aktuelle Position wird dem Fahrer des Kraftfahrzeugs schließlich mittels einer Anzeige, z.B. einem Farb-LCD-Display, mitgeteilt.

Ein derartiges Gerät ist beispielsweise aus der DE 198 03 662 A1 bekannt.

Die digitalisierte Straßenkarte weist üblicherweise alle öffentlich befahrbaren Straßen auf. Private Anlagen, wie z. B. Werksgelände oder Freizeitanlagen, sowie Parkhäuser, off-road-Gebiete mit deren Strassen und Wegen und dergleichen sind üblicherweise nicht auf diesen digitalisierten Straßenkarten erfasst. Sollte sich das Kraftfahrzeug in derartigen nicht digitalisierten Gebieten bewegen, ist ein Abgleich der Sensorik eines Navigationssystems mit den zu befahrenden Wegen nicht möglich. Dadurch entstehen durch Sensordrift, insbesondere beim Start des Systems, erhebliche Abweichungen der Fahrzeugausrichtung und Position. Sollte sich ein Fahrzeug in einem off-road-Gebiet oder einem freien, nicht erfaßten Gelände befinden, so kann die aktuelle Position mittels Satellitenortung (z. B. GPS) und/oder Ortung über Cellulare Netzwerke (GSM, UMTS) ermittelt werden und bei Wiedereintritt in das digitalisierte Straßennetz synchronisiert werden. Die Sensorik kann jedoch oft auch nicht durch diese Hilfsmittel synchronisiert werden, da oftmals insbesondere bei Parkhäusern eine derartige Funktion nicht gewährleistet ist.

Aufgabe der vorliegenden Erfindung ist es daher, ein Verfahren und eine Vorrichtung zur Positionskorrektur bei einem Navigationssystem bei Befahren von nicht digitalisierten Gebieten mittels Koppelnavigation anzugeben. Diese Aufgabe wird durch die kennzeichnenden Merkmale der unabhängigen Ansprüche gelöst.

Die vorliegende Erfindung macht sich die Eigenschaft zu Nutze, dass insbesondere in Parkhäusern sogenannte Vorzugsrichtungen bestehen. Diese Vorzugsrichtungen sind nicht auf eine Ebene oder eine Ausrichtung beschränkt. Vorzugsrichtungen sind insbesondere längere Ein- und Ausfahrtstrecken. Das erfindungsgemäße Verfahren erkennt ein Verlassen des digitalisierten Gebiets und bestimmt daraufhin eine derartige Vorzugsrichtung, welche als Hauptachse oder Hauptachsenrichtung definiert wird. Bei Fahrt innerhalb des nicht digitalisierten Gebiets, z. B. eines Parkhauses, wird nun beobachtet, ob das Fahrzeug sich innerhalb einer vorbestimmten Grenze der zuvor definierten Hauptachsenrichtung bewegt. Ist dies der Fall, so wird bestimmt, ob eine Abweichung vorliegt und ggf. diese Abweichung auf die Hauptachsenrichtung korrigiert. Dadurch werden Fehler, die insbesondere von der Richtungserkennung verursacht werden, kompensiert.

In einer Weiterbildung kann das System Ein- und Ausfahrtswege eines nicht digitalisierten Gebiets erfassen und abspeichern. Bei Einfahrt in ein nicht digitalisiertes Gebiet kann eine bestimmte definierbare Länge eines Einfahrtwegs dem nicht digitalisierten Gebiet zugeordnet und im Speicher abgespeichert werden. Das System arbeitet dann mit dem zuvor beschriebenen Verfahren. Sobald das System erkennt, dass das nicht digitalisierte Gebiet verlassen wurde, kann eine vorbestimmte Länge des zuletzt gefahrenen Wegs als Ausfahrtsweg abgespeichert werden. Sollte das Fahrzeug zu einem späteren Zeitpunkt das gleiche nicht digitalisierte Gebiet befahren, so kann dies durch Vergleich mit dem zuvor abgespeicherten Einfahrtsweg erkannt werden und die Positionsbestimmung deaktiviert werden. Das System wartet nun so lange bis die zuvor abgespeicherte Ausfahrtsstrecke erkannt wird und aktiviert die Positionsbestimmung von Neuem.

In einer weiteren Ausbildung kann die digitalisierte Straßenkarte um die neu befahrenen Strecken erweitert werden. Dabei werden diese neu erfaßten Strecken in ähnlicher Weise abgespeichert wie das bereits fest abgespeicherte Straßennetz.

Weitere Vorteile, Merkmale und Anwendungsmöglichkeiten ergeben sich aus der Beschreibung eines Ausführungsbeispiels in Verbindung mit den Zeichnungen. Es zeigen:
- Figur 1: ein erfindungsgemäßes Navigationssystem,
- Figur 2: eine Darstellung eines Teils einer digitalisierten Straßenkarte sowie eines nicht digitalisierten Gebiets und
- Figur 3: eine Darstellung der abzuspeichernden Ein- und Ausfahrtswege eines nicht digitalisierten Gebiet.

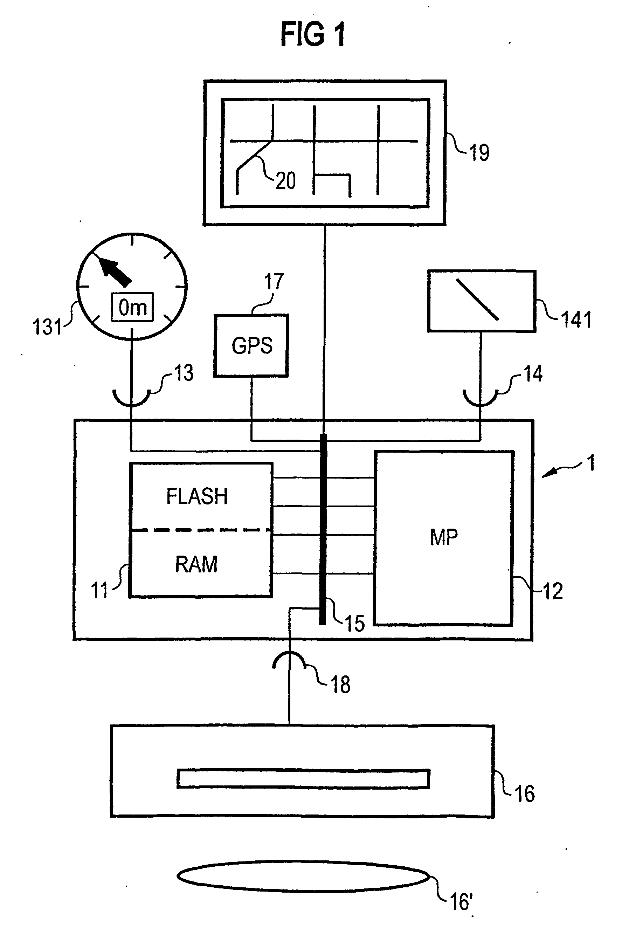

In Figur 1 weist ein Navigationsgerät 1 einen Speicher 11, z. B. ein RAM oder einen nichtflüchtigen Speicher, einen Mikroprozessor 12, einen Eingang 13 für ein Tachometersignal oder einen Odometer 131 sowie einen Eingang 14 für ein Gyroskop 141 als Richtungsmesser auf. Des weiteren kann ein GPS 17 mit dem Mikroprozessor verbunden sein. Der Eingang 14 und das Gyroskop 141 können auch im Gehäuse des Navigationsgeräts 1 angeordnet sein. Das RAM 11, die Eingänge 13, 14 und ein Massenspeicher, der als Laufwerk 16 für eine CD-ROM 161 oder eine DVD (Digital Versatile Disk) ausgebildet ist, sind mit dem Mikroprozessor 12 über einen Eingang 18 mit einem Systembus 15 verbunden. Über den Eingang 13 erhält der Mikroprozessor 12 ein Entfernungssignal des Odometers 131 und über den Eingang 14 ein Richtungssignal des Gyroskops 141. Eine Anzeige 19, z.B. ein Farb-LCD-Schirm, stellt dem Fahrer eine digitalisierte Straßenkarte 20 dar.

Die Signale werden in kurzen Abständen gemessen. Die jeweils gemessenen Entfernungen und Richtungen stehen für Vektoren, die zwecks Positionsbestimmung addiert werden. Nach einer Addition oder nach einer Vielzahl von Additionen erfolgt ein Vergleich der errechneten Position mit einer wahrscheinlichen Position auf einer digitalisierten Straßenkarte 20, die auf der Disk 161 gespeichert ist.

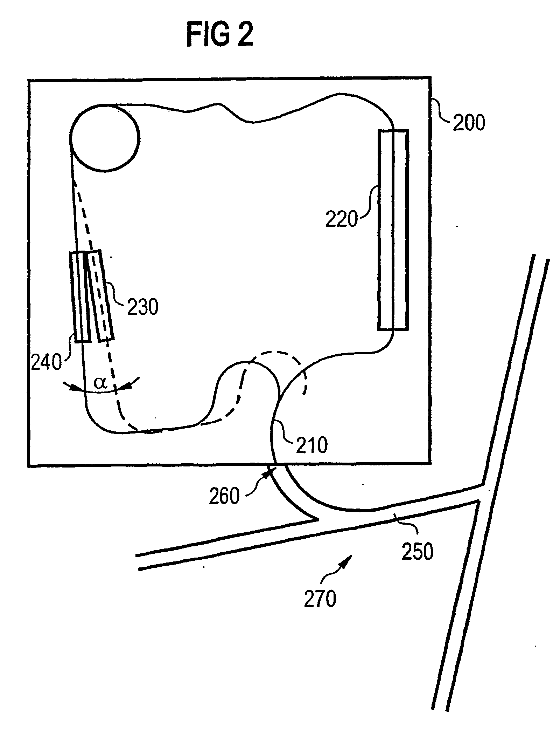

Figur 2 zeigt eine Darstellung eines Straßennetzes mit einem digitalisierten Gebiet 270 und mit einem nicht digitalisierten Gebiet 200. Das nicht digitalisierte Gebiet kann z. B. ein Parkhaus sein, welches in Figur 2 mit dem Bezugszeichen 200 versehen ist. Der Anzeigenschirm 19 kann selbstverständlich lediglich die digitalisierte Straßenkarte anzeigen. Figur 2 zeigt zur Erläuterung der vorliegenden Erfindung eine Darstellung beider Gebiete, der digitalisierten und der nicht digitalisierten. Normalerweise bewegt sich das Fahrzeug auf öffentlichen Straßen, die durch die digitalisierte Straßenkarte 270 auf der CD-ROM 161 erfasst werden können. Mittels der Navigationssensoren 131, 141, 17 berechnet das Navigationsgerät 1 eine Position, die dann mittels Vergleich mit der digitalisierten Karte 270 (map-matching) einem wahrscheinlichen Aufenthaltsort auf einer digitalisierten Straße 250 zugeordnet wird. Die digitalisierte Karte 270 kann Informationen enthalten, die den Beginn eines nicht digitalisierten Bereichs anzeigen. Zum Beispiel kann eine Position 260 anzeigen, dass ein nicht digitalisierter Bereich beginnt.

Sollte das Fahrzeug sich über den Punkt 260 hinausbewegen, so beginnt eine Routine zur Erfassung der Bewegung innerhalb eines nicht digitalisierten Bereichs 200. Im vorliegenden Fall ist der nicht digitalisierte Bereich 200 ein Parkhaus. Im Parkhaus 200 ist aufgrund der Umbauung kein GPS-Empfang möglich. Das Fahrzeug muss mit den Sensordaten positioniert werden. Zu diesem Zeitpunkt sind keinerlei Informationen über den nicht digitalisierten Bereich 200, nämlich das Parkhaus, vorhanden. Das Verfahren verwendet nun eine Zustandsmaschine, die den Bewegungszustand des Fahrzeugs detektiert. Maßgebend sind die Zustände Gerade und Kurve. Im Beispiel wird nach der Parkhauseinfahrt 210 eine lange Strecke als Gerade erkannt. Dadurch erfüllt diese Strecke das Kriterium für eine Hauptachse 220 und wird als solche gespeichert. Als Kriterium für eine Hauptachse kann auch ein gewisser Fensterbereich, wie er in Figur 2 angedeutet ist, verwendet werden, innerhalb dessen sich ein Fahrzeug fortbewegen muss, um eine Hauptachse zu definieren. Als praktische Größe kann eine Länge von z. B. 30 m und eine Breite von 1,5 bis 2 Fahrzeugbreiten gewählt werden. Von nun an kann sich das Fahrzeug beliebig durch das Parkhaus bewegen. Zum Beispiel kann es auf andere Parkebenen fahren, abgestellt werden usw.. Vor allem wenn länger geparkt wird, haben heutige Navigationssysteme Probleme mit der Positionierung. Die Fehler sind zum Großteil auf die Drift des Drehratensensors (Gyroskops) zurückzuführen. Die Folge sind hauptsächlich Fehler in der Ausrichtung des Fahrzeugs, die sich über die gefahrene Strecke zu Positionsfehlern aufsummieren.

Nachfolgend wird das Verfahren zur Erfassung der Position und Richtungskorrektur innerhalb eines nicht digitalisierten Bereichs näher beschrieben. Fährt das Fahrzeug eine hinreichend lange Strecke gerade, wird diese Strecke erkannt und deren Ausrichtung mit den gespeicherten Hauptachsen 220 verglichen. Im vorliegenden Beispiel wird eine Gerade 230 erkannt und mit der gespeicherten Hauptachsenrichtung 220 verglichen. Es wird festgestellt, dass ein Winkelfehler α vorliegt. Liegt dieser Winkelfehler α innerhalb eines Grenzbereichs, z. B. 10°, so wird die Ausrichtung der erkannten Gerade auf die Ausrichtung der gespeicherten Hauptachse 220 um diesen Winkel α angepasst. Durch die Korrektur wird ab nun die korrigierte Gerade 240 zur Positionserkennung weiter verwendet. Durch diese Maßnahme kann der Fehler, der durch die gestrichelte Gerade in Figur 2 angezeigt ist, vermieden werden, und eine korrekte Erkennung des Wiedereintritts in das digitalisierte Straßennetz kann problemlos erfolgen.

Die Erkennung einer Hauptachse erfolgt mittels des Entfernungssensors 131 und des Richtungssensors 141. Fährt das Fahrzeug eine gerade Strecke von z. B. mehr als 30 Metern mit Richtungsschwankungen, die wie zuvor beschrieben innerhalb eines vorgegebenen relativ engen Bereichs liegen, so wird eine Hauptachsenrichtung erkannt und gespeichert. Mehrere dieser Hauptachsen können definiert werden. Selbstverständlich sollte der Winkelunterschied zwischen den Hauptachsen deutlich größer als der Grenzwinkel, innerhalb dessen eine Hauptachse detektiert werden kann, liegen. Das Längenlimit zum Erkennen einer geraden Strecke, die dem Vergleich mit den Hauptachsen dient, kann z. B. die Hälfte des Längenlimits zum Erkennen einer Hauptachse sein. Wird eine Vergleichsgerade erkannt, so wird diese mit den gespeicherten Hauptachsen verglichen. Stimmen die Ausrichtungen der Vergleichsgerade und einer Hauptachse bis auf einen Toleranzwinkel überein, wobei dieser ohne Orientierung, also vorzeichenlos, erfolgt, so wird die Ausrichtung des Fahrzeugs auf die passende Hauptachse korrigiert. Als Toleranzwinkel können z. B. wie zuvor beschrieben 10° verwendet werden. Stimmt die Vergleichsachse nicht mit einer Hauptachse überein und hat die Vergleichsgerade eine Länge, die größer als das Limit für eine Hauptachse ist, so kann eine neue zusätzliche Hauptachse generiert werden. Dadurch, dass die Ausrichtung des Fahrzeugs öfter auf die Hauptachsen des Parkhauses korrigiert wird, werden die Fehler der Koppelortung minimiert. Durch die kleineren Richtungsfehler bleiben auch die Positionsfehler klein, da sie sich aus dem Richtungsfehler und dem zurückgelegten Weg ergeben. Distanzfehler spielen dabei eine eher untergeordnete Rolle, da diese normalerweise fortlaufend korrigiert werden und der Aufenthalt in einem nicht digitalisierten Gebiet im Vergleich Aufenthalt im digitalisierten Gebiet relativ kurz ist. Auch wenn Distanzfehler innerhalb des nicht digitalisierten Gebiets nicht korrigiert werden können, ist die Genauigkeit der Entfernungsermittlung hinreichend genau.

Die während einer Fahrt in einem nicht digitalisierten Gebiet gesammelte Information kann diesen nicht digitalisierten Gebieten zugeordnet werden und bei zukünftigen Fahrten im nicht digitalisierten Gebiet verwendet werden. Zum Beispiel können alle Informationen über sämtliche erfassten Hauptachsen diesem Gebiet fest zugeordnet werden und im nichtflüchtigen Teil des Speichers 11 abgespeichert werden. Das nicht digitalisierte Gebiet kann über karthesische Koordinaten, welche aufgrund der ersten Befahrung des nicht digitalisierten Gebiets abgeschätzt werden, abgespeichert werden. Bei erneutem Eintritt in das nicht digitalisierte Gebiet können nun die zuvor gespeicherten Hauptachsen zur Positionskorrektur verwendet werden.

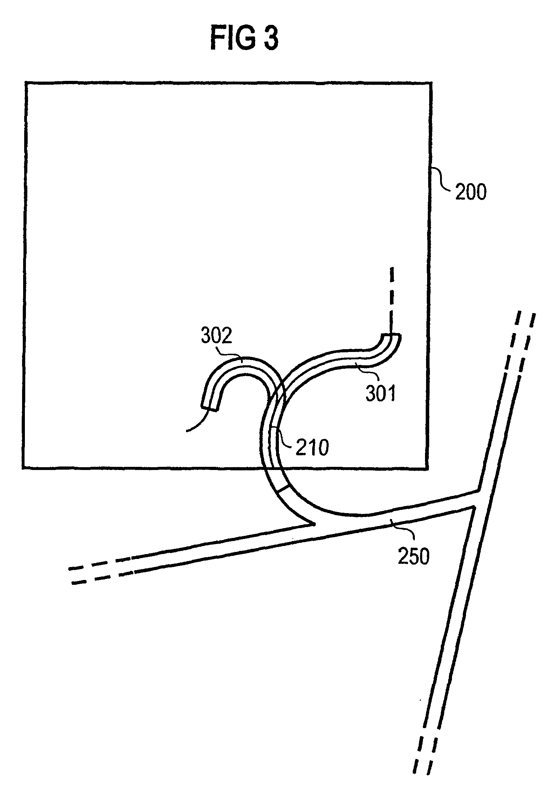

Da eine Positionserkennung innerhalb des nicht digitalisierten Gebiets nicht notwendig ist, kann in einer Weiterbildung der vorliegenden Erfindung sowohl eine Einfahrtstrecke wie auch eine Ausfahrtsstrecke aus dem nicht digitalisierten Gebiet mit einer jeweils vorbestimmten Länge definiert und abgespeichert werden. Gemäß Figur 3 wird zu diesem Zweck, z. B. beim Einfahren in das nicht digitalisierte Gebiet die Charakteristik der Einfahrtsstrecke in das Parkhaus 200 erfasst und abgespeichert. Zur digitalen Erfassung werden z.B. die Koordinaten mehrere Punkte abgetastet und gespeichert. Die Länge dieser Strecke kann auf z. B. 30 Meter beschränkt sein.

Figur 3 zeigt mit dem Bereich 301 die digital erfasste Einfahrtsstrecke in das Parkhaus 200. Während des Aufenthalts im Parkhaus wird das zuvor beschriebene Verfahren zur Korrektur der Position verwendet. Dabei kann z. B. fortlaufend die Charakteristik der letzten 30 Meter Wegstrecke, die das Fahrzeug zurückgelegt hat, temporär im Speicher gespeichert werden. Wird erkannt, dass das Fahrzeug den nicht digitalisierten Bereich verlassen hat und sich wieder auf einer digitalisierten Straße befindet, so wird die zuletzt gespeicherte Charakteristik der letzten 30 Meter Fahrtstrecke als Ausfahrtstrecke des nicht digitalisierten Gebiets abgespeichert. Auf diese Weise werden charakteristische Daten eines nicht digitalisierten Gebiets erfaßt.

Wird nun bei zukünftigen Fahrten dieses zuvor erfasste, nicht digitalisierte Gebiet erneut befahren, so erkennt das Navigationsgerät anhand der zuvor abgespeicherten Charakteristik der Einfahrtstrecke 301 ein Befahren des nicht digitalisierten Bereichs. Eine genaue Positionserkennung und Fehlerkorrektur kann nun deaktiviert werden. Das System überwacht nun lediglich die Charakteristik der befahrenen Strecke und vergleicht sie mit der zuvor gespeicherten Ausfahrtstrecke 302. Wird ein Befahren der Ausfahrtstrecke 302 erkannt, so schaltet das System auf normalen Navigationsbetrieb um. Als zusätzliche Sicherheitsmaßnahme kann z. B. der Grenzbereich des nicht digitalisierten Bereichs überwacht werden, um eine neue Synchronisation mit der digitalisierten Karte zu veranlassen, falls dieser Bereich verlassen wurde.

In einer einfacheren Ausführung kann die Erfassung von charakteristischen Merkmalen der Einfahrtstrecke gänzlich entfallen. Sollte eine digitalisierte Straßenkarte, wie z.B. in Fig. 2 gezeigt, einen Erfassungspunkt 260 abgespeichert haben, so erkennt das System beim Überfahren dieses Punktes den Eintritt in ein nicht digitalisiertes Gebiet. Von nun an muß lediglich das Passieren des Ausfahrtwegs 302 abgewartet werden, um das System wieder mit der digitalisierten Straßenkarte zu synchronisieren. Das Erfassen des Ausfahrtwegs erfolgt wie oben beschrieben.

In einer Weiterbildung kann eine digitalisierte Straßenkarte durch obiges Verfahren derart erweitert werden, das zusätzliche digitale Erweiterungskarten durch Fahren in dem nicht digitalisierten Gebiet gebildet werden. Anstelle der Einfahrtund Ausfahrtwege werden nun alle befahrenen Wege/Strecken digital erfaßt. Diese können dann in einem nicht flüchtigen Speicher des Speicherbereichs 11 abgespeichert werden. Mittels dieses Verfahrens werden oft befahrene nicht digitalisierte Straßen und Wege abgespeichert und die verwendete fest vorgegebene digitalisierte Straßenkarte kann ständig erweitert werden. So können z. B. Gebiete, wie Werksgelände oder Freizeitanlagen, die der Benutzer regelmäßig befährt, erkannt und fest gespeichert werden. Dadurch werden die Fehler beim Befahren dieser nicht digitalisierten Gebiete durch das selbstlernende Verfahren minimiert. Werden diese neu erfassten Segmente an die bereits vorhandene digitalisierte Karte angebunden, so kann die digitalisierte Karte dynamisch erweitert werden und die so erhaltenen Informationen können auch zum Navigieren innerhalb von zuvor nicht digitalisierten Gebieten verwendet werden. Da diese Funktion erheblichen Speicherplatz benötigt, kann die Funktion nur für vom Fahrer gezielt gewünschte Gebiete mittels Bedienelementen am Navigationsgerät aktiviert werden.

## Patentansprüche

1. Verfahren zur Positionskorrektur bei einem Navigationssystem (1) bei Befahren von nicht digitalisierten Gebieten mittels Koppelnavigation, **gekennzeichnet durch** die Schritte:
- Erkennen einer Fahrt in einem nicht digitalisierten Gebiet;
- Bestimmen wenigstens einer Hauptachsenrichtung (220) eines Fahrzeugs ;
- Vergleich der Fahrtrichtung, die anhand einer Gerade (230) erkannt wird, mit der zuvor bestimmten Hauptachsenrichtung (220); und
- Bei Übereinstimmung der Richtungen innerhalb einer vorgegebenen Grenze, Korrektur der Gerade (230) auf die Hauptachsenrichtung (220).

2. Verfahren nach Anspruch 1, **dadurch gekennzeichnet, dass** eine Hauptachsenrichtung (220) durch eine Geradeausfahrt von vorbestimmter Länge erkannt wird.

3. Verfahren nach Anspruch 2, **dadurch gekennzeichnet, dass** eine Hauptachsenrichtung (220) durch eine Fahrt innerhalb eines vordefinierten Fensterbereichs definiert wird.

4. Verfahren nach einem der vorhergehenden Ansprüche, **dadurch gekennzeichnet, dass** die ermittelten Hauptachsenrichtungen (220) dem nicht digitalisierten Gebiet zugeordnet und abgespeichert werden.

5. Verfahren nach einem der vorhergehenden Ansprüche, **dadurch gekennzeichnet, dass** wenigstens ein Einfahrtsweg (301) vorbestimmter Länge in das nicht digitalisierte Gebiet mit Bezug auf das nicht digitalisierte Gebiet abgespeichert wird.

6. Verfahren nach einem der vorhergehenden Ansprüche, **dadurch gekennzeichnet, dass** wenigstens ein Ausfahrtsweg (302) vorbestimmter Länge aus dem nicht digitalisierten Gebiet mit Bezug auf das nicht digitalisierte Gebiet abgespeichert wird.

7. Verfahren nach Anspruch 5 oder 6, **dadurch gekennzeichnet, dass** nach Erkennung eines zuvor abgespeicherten Einfahrtswegs (301) die Positionserkennung bis zur Erkennung des zuvor abgespeicherten Ausfahrtwegs deaktiviert wird.

8. Verfahren nach Anspruch 6, **dadurch gekennzeichnet, dass** nach Erkennung eines zuvor abgespeicherten Referenzpunkts (260) die Positionserkennung bis zur Erkennung des zuvor abgespeicherten Ausfahrtwegs deaktiviert wird.

9. Navigationsgerät zur Koppelnavigation, das aufweist:
- wenigstens eine Sensoranordnung (131, 141) zur Bestimmung einer Entfernung und einer Richtung,
- wenigstens einen Prozessor (12) zur Positionsberechnung aufgrund von Messwerten der Sensoranordnung (131, 141), welcher mit einem Speicher (11) gekoppelt ist,
- eine auf einem Speichermedium (161) gespeicherte digitale Straßenkarte mit digitalisierten Gebieten, mit der eine errechnete Position verglichen wird,
**dadurch gekennzeichnet, dass**
- der Prozessor (12) bei Eintreten in ein nicht digitalisiertes Gebiet wenigstens eine Hauptachsenrichtung (220) eines Fahrzeugs bestimmt und im Speicher (11) abspeichert, und
- der Prozessor (12) die aktuelle Fahrtrichtung die anhand einer Gerade (230) erkannt wird, mit der zuvor bestimmten Hauptachsenrichtung (220) vergleicht und die Gerade (230) auf die Hauptachsenrichtung (220) korrigierte wenn die Richtungen innerhalb einer vorgegebenen Grenze übereinstimmen.

10. Navigationsgerät nach Anspruch 9, **dadurch gekennzeichnet, dass** der Prozessor (12) eine Hauptachsenrichtung durch eine Geradeausfahrt von vorbestimmter Länge erkennt.

11. Navigationsgerät nach Anspruch 9, **dadurch gekennzeichnet, dass** der Prozessor (12) eine Hauptachsenrichtung durch eine Fahrt innerhalb eines vordefinierten Fensterbereichs definiert.

12. Navigationsgerät nach einem der Ansprüche 9-11, **dadurch gekennzeichnet, dass** der Prozessor (12) die ermittelten Hauptachsenrichtungen dem nicht digitalisierten Gebiet zuordnet und abspeichert.

13. Navigationsgerät nach einem der Ansprüche 9-12, **dadurch gekennzeichnet, dass** der Prozessor (12) wenigstens einen Einfahrtsweg (301) vorbestimmter Länge in das nicht digitalisierte Gebiet mit Bezug auf das nicht digitalisierte Gebiet abspeichert.

14. Navigationsgerät nach einem der Ansprüche 9-13, **dadurch gekennzeichnet, dass** der Prozessor wenigstens einen Ausfahrtsweg (302) vorbestimmter Länge aus dem nicht digitalisierten Gebiet mit Bezug auf das nicht digitalisierte Gebiet abspeichert.

15. Navigationsgerät nach Anspruch 13 oder 14, **dadurch gekennzeichnet, dass** der Prozessor (12) nach Erkennung eines zuvor abgespeicherten Einfahrtswegs (301) die Positionserkennung bis zur Erkennung des zuvor abgespeicherten Ausfahrtwegs (302) deaktiviert.

16. Navigationsgerät nach Anspruch 14, **dadurch gekennzeichnet, dass** der Prozessor (12) nach Erkennung einer abgespeicherten Referenzposition (260) die Positionserkennung bis zur Erkennung des zuvor abgespeicherten Ausfahrtwegs (302) deaktiviert.

## Claims

1. Method for position correction in a navigation system (1) when travelling in non-digitized areas by means of dead-reckoning navigation, **characterized by** the following steps:
- detection of travel in a non-digitized area;
- determination of at least one principal axis direction (220) of a vehicle;
- comparison of the direction of travel, detected by means of a straight line (230), with the previously defined principal axis direction (220); and,
- in the event of matching the directions within a predefined limit, correction of the straight line (230) according to the principal axis direction (220).

2. Method according to Claim 1, **characterized in that** a principal axis direction (220) is detected by means of a straight-line journey of predefined length.

3. Method according to Claim 2, **characterized in that** a principal axis direction (220) is defined by means of a journey within a predefined window area.

4. Method according to one of the preceding claims, **characterized in that** the determined principal axis directions (220) are allocated to the non-digitized area and stored.

5. Method according to one of the preceding claims, **characterized in that** at least one entry road (301) of predefined length into the non-digitized area is stored with reference to the non-digitized area.

6. Method according to one of the preceding claims, **characterized in that** at least one exit road (302) of predefined length from the non-digitized area is stored with reference to the non-digitized area.

7. Method according to Claim 5 or 6, **characterized in that**, following detection of a previously stored entry road (301), the position detection is deactivated until the previously stored exit road is detected.

8. Method according to Claim 6, **characterized in that**, following detection of a previously stored reference point (260), the position detection is deactivated until the previously stored exit road is detected.

9. Navigation device for dead-reckoning navigation, comprising the following elements:
- at least one sensor arrangement (131, 141) for determining a distance and a direction,
- at least one processor (12) for position calculation based on measured values of the sensor arrangement (131, 141), which is connected to a memory (11),
- a digitized road map stored on a storage medium (161) with digitized areas, with which a calculated position is compared,
**characterized in that**
- the processor (12), on entry into a non-digitized area, determines at least one principal axis direction (220) of a vehicle and stores it in the memory (11), and
- the processor (12) compares the current direction of travel, detected by means of a straight line (230), with the previously determined principal axis direction (220) and corrects the straight line (230) according to the principal axis direction (220) if the directions match within a predefined limit.

10. Navigation device according to Claim 9, **characterized in that** the processor (12) detects a principal axis direction by means of a straight-line journey of predefined length.

11. Navigation device according to Claim 9, **characterized in that** the processor (12) defines a principal axis direction by means of a journey within a predefined window area.

12. Navigation device according to one of Claims 9-11, **characterized in that** the processor (12) allocates the determined principal axis directions to the non-digitized area and stores them.

13. Navigation device according to one of Claims 9-12, **characterized in that** the processor (12) stores at least one entry road (301) of predefined length into the non-digitized area with reference to the non-digitized area.

14. Navigation device according to one of Claims 9-13, **characterized in that** the processor stores at least one exit road (302) of predefined length from the non-digitized area with reference to the non-digitized area.

15. Navigation device according to Claim 13 or 14, **characterized in that**, following detection of a previously stored entry road (301), the processor (12) deactivates the position detection until the previously stored exit road (302) is detected.

16. Navigation device according to Claim 14, **characterized in that**, following detection of a stored reference position (260), the processor (12) deactivates the position detection until the previously stored exit road (302) is detected.

## Revendications

1. Procédé de correction de position dans un système de navigation (1) par navigation estimée, en cas de déplacement dans des secteurs non numérisés, **caractérisé par** les étapes :
- reconnaissance d'un déplacement dans un secteur non numérisé ;
- définition d'au moins une direction dans l'axe principal (220);
- comparaison de la direction de déplacement qui est détectée à l'aide d'une ligne droite (230) avec la direction dans l'axe principal (220) qui a été préalablement définie ; et
- en cas de concordance des directions dans une limite prédéfinie, correction de la ligne droite (230) , par rapport à la direction dans l'axe principal (220).

2. Procédé selon la revendication 1, **caractérisé en ce qu'**une direction dans un axe principal (220) est identifiée par une conduite en ligne droite sur une longueur prédéfinie.

3. Procédé selon la revendication 2, **caractérisé en ce qu'**une direction dans un axe principal (220) est définie par un déplacement à l'intérieur d'une zone de fenêtre prédéfinie.

4. Procédé selon l'une quelconque des revendications précédentes, **caractérisé en ce que** les directions déterminées pour l'axe principal (220) sont affectées au secteur non numérisé, puis sauvegardées.

5. Procédé selon l'une quelconque des revendications précédentes, **caractérisé en ce qu'**au moins une voie d'accès (301) d'une longueur prédéfinie dans le secteur non numérisé est sauvegardée en référence au secteur non numérisé.

6. Procédé selon l'une quelconque des revendications précédentes, **caractérisé en ce qu'**au moins une voie de sortie (302) d'une longueur prédéfinie du secteur non numérisé est sauvegardée en référence au secteur non numérisé.

7. Procédé selon l'une quelconque des revendications 5 ou 6, **caractérisé en ce qu'**après reconnaissance d'une voie d'accès (301) préalablement sauvegardée, la reconnaissance de position est désactivée jusqu'à la reconnaissance de la voie de sortie préalablement sauvegardée.

8. Procédé selon la revendication 6, **caractérisé en ce qu'**après reconnaissance d'un point de référence (260) préalablement sauvegardé, la reconnaissance de position est désactivée jusqu'à la reconnaissance de la voie de sortie préalablement sauvegardée.

9. Instrument destiné à la navigation estimée, présentant :
- au moins une configuration de capteurs (131, 141) pour déterminer une distance et une direction,
- au moins un processeur (12) pour calculer la position sur la base de valeurs mesurées par la configuration de capteurs (131, 141), lequel est couplé à une mémoire (11),
- une carte routière numérique, sauvegardée dans une mémoire (161), avec des secteurs numérisés avec lesquels une position calculée est comparée, **caractérisé en ce que**
- lorsqu'on entre dans un secteur non numérisé, le processeur (12) détermine au moins une direction dans un axe principal (220) et la sauvegarde dans la mémoire (11) et
- le processeur (12) compare la direction de déplacement actuelle qui est détectée à l'aide d'une ligne droite (230) avec la direction dans l'axe principal (220) qui a été préalablement déterminée et corrige la ligne droite (230) par rapport à la direction dans l'axe principal (220), si les directions concordent au sein d'une limite prédéfinie.

10. Instrument de navigation selon la revendication 9, **caractérisé en ce que** le processeur (12) détecte une direction dans l'axe principal par une conduite en ligne droite d'une longueur prédéfinie.

11. Instrument de navigation selon la revendication 9, **caractérisé en ce que** le processeur (12) définit une direction dans l'axe principal, par une conduite au sein d'une zone de fenêtre prédéfinie.

12. Instrument de navigation selon l'une quelconque des revendications 9 à 11, **caractérisé en ce que** le processeur (12) affecte les directions dans l'axe principal au secteur non numérisé et les sauvegarde.

13. Instrument de navigation selon l'une quelconque des revendications 9 à 12, **caractérisé en ce que** le processeur (12) sauvegarde au moins une voie d'accès (301) d'une longueur prédéfinie dans le secteur non numérisé, en référence au secteur non numérisé.

14. Instrument de navigation selon l'une quelconque des revendications 9 à 13, **caractérisé en ce que** le processeur sauvegarde au moins une voie de sortie (302) d'une longueur prédéfinie du secteur non numérisé, en référence au secteur non numérisé.

15. Instrument de navigation selon l'une quelconque des revendications 13 ou 14, **caractérisé en ce qu'**après reconnaissance d'une voie d'accès (301) préalablement sauvegardée, le processeur (12) désactive la reconnaissance de position jusqu'à la reconnaissance de la voie de sortie (302) préalablement sauvegardée.

16. Instrument de navigation selon la revendication 14, **caractérisé en ce qu'**après reconnaissance d'une position de référence (260) sauvegardée, le processeur (12) désactive la reconnaissance de position jusqu'à la reconnaissance de la voie de sortie (302) préalablement sauvegardée.
